# EUROPEAN PATENT SPECIFICATION

(11) **EP 3 357 343 B1**
(45) Date of publication and mention of the grant of the patent: **12.08.2020**
(21) Application number: 16850954.5
(22) Date of filing: 22.08.2016
(51) Int. Cl.: A23L 27/20, C11C 3/00, A23D 7/00, A23G 1/46

(54) **FAT COMPOSITION AND METHOD FOR MANUFACTURING SAME**
FETTZUSAMMENSETZUNG UND VERFAHREN ZU DESSEN HERSTELLUNG
COMPOSITION DE MATIÈRE GRASSE ET SON PROCÉDÉ DE FABRICATION

(30) Priority: 02.10.2015 JP 2015197193; 01.02.2016 JP 2016016806
(43) Date of publication of application: 08.08.2018
(73) Proprietor: J-Oil Mills, Inc., Tokyo 104-0044 (JP)
(72) Inventor: TOKUCHI, Takahiro, Tokyo 104-0044 (JP); INOUE, Masahiro, Tokyo 104-0044 (JP)
(74) Representative: Mewburn Ellis LLP
(86) International application number: PCT/JP2016/074319
(87) International publication number: WO 2017/056778

(56) References cited:
- EP-A1- 0 463 668
- JP-A- S62 198 352
- JP-A- S62 259 542
- JP-A- 2002 069 481
- JP-A- 2014 054 207
- JP-A- 2015 053 880
- US-A- 5 043 180
- US-A1- 2010 196 534

## Description

### TECHNICAL FIELD

The present invention relates to a method for manufacturing an oil and fat composition.

### BACKGROUND ART

Butter has a unique flavor that makes butter desirable as an ingredient. Among margarines developed as butter substitutes, there are marketed products that are endowed with butter flavor by addition of butter. Butter, however, is costly, butter production in Japan is declining, and emergency imports and other measures are currently being taken.

Attempts have been made in the past to impart butter flavor through effective utilization of costly butter. Patent Document 1 (Japanese Laid-open Patent Publication No. 64-39962) discloses a method for manufacturing a food product endowed with a butter-like flavor by adding a butter fat containing a predetermined amount of a predetermined compound.

Patent Document 2 (Japanese Laid-open Patent Publication No. 09-94062) discloses a method for manufacturing a butter flavor by hydrolyzing milk fat using an enzyme, then oxidizing the milk fat by ultraviolet irradiation to obtain a peroxide value (POV) in the range of 1.5 to 9.0.

Patent Document 3 (Japanese Laid-open Patent Publication No. 2015-53880) discloses a milk-flavor taste material obtained by heating a composition including 60 to 98.9 wt% of an oil and fat containing 30 to 100 wt% milk fat with respect to the total amount of oil and fat so that the product temperature reaches 140 to 210°C.

Patent Document 4 (Japanese Laid-open Patent Publication No. 2014-54207) discloses a method for manufacturing a cream having a burnt butter flavor by adding heated milk fat obtained by heat-treating milk fat for 10 seconds to 240 minutes at a temperature of 110 to 170°C in the presence of milk protein and lactose to cream in a ratio of 0.5 to 10 wt% with respect to the total amount of cream.

Patent Document 5 (Japanese Laid-open Patent Publication No. 62-198352) discloses a butter-like concentrate obtained by heating a composition including 25 to 98 wt% of an oil and fat containing milk fat at a temperature of 70 to 140°C for 10 minutes to several hours.

Patent Document 6 (Japanese Laid-open Patent Publication No. 62-259542) discloses a spread having a milk fat content of 9 to 65% (w/w), the spread including dairy cream heated at a temperature of at least 70°C for at least 20 minutes.

However, all of the flavors described above are inadequate in terms of milk feeling or milk flavor, as indicated in the comparative examples described below, and can potentially be improved.

### [Prior Art Documents]

### [Patent Documents]

[Patent Document 1] Japanese Laid-open Patent Application No. 64-39962
[Patent Document 2] Japanese Laid-open Patent Application No. 09-94062
[Patent Document 3] Japanese Laid-open Patent Application No. 2015-53880
[Patent Document 4] Japanese Laid-open Patent Application No. 2014-54207
[Patent Document 5] Japanese Laid-open Patent Application No. 62-198352
[Patent Document 6] Japanese Laid-open Patent Application No. 62-259542
US2010196534 relates to methods of making flavour concentrates, in particular lipid, condensed and solids flavour concentrates, together with the flavour concentrates produced thereby.
EP0463668 relates to a process for preparing a flavour concentrate, involving the steps of: (a) mildly oxidising triglyceride fat, and (b) hydrolysing the triglyceride fat to a degree of hydrolysis exceeding 10%.
US5043180 is concerned with a flavour concentrate mainly consisting of glyceride fat and containing at least 0.6 ppm n-pentanal and/or at least 0.1 ppm n-nonanal and anti-oxidant.

### DISCLOSURE OF THE INVENTION

### [Problems to Be Solved by the Invention]

Adequate milk feeling or milk flavor has thus not been obtained by conventional methods for manufacturing a butter flavor. Therefore, an object of the present invention is to provide a method for manufacturing an oil and fat composition whereby excellent milk feeling or milk flavor is obtained.

### [Means to Solve the Problems]

As a result of concentrated investigation, the inventors discovered that an oil and fat composition containing 50% by mass to 100% by mass of milk fat and having a pentanal/hexanal ratio by mol of 0.15 to 0.70 based on volatile components at 180°C has excellent milk feeling or milk flavor.

### [Advantageous Effects of the Invention]

Through use of the oil and fat composition prepared according to the present invention, a food product can be endowed with a milk feeling or milk flavor.

### BEST MODE FOR CARRYING OUT THE INVENTION

Described herein is an oil and fat composition containing 50% by mass to 100% by mass of milk fat and having a pentanal/hexanal ratio by mol of 0.15 to 0.70 based on volatile components at 180°C.

Furthermore, the peroxide value of the oil and fat composition is preferably 15 to 150.

Furthermore, the oil and fat content of the oil and fat composition is preferably 90% by mass to 100% by mass.

Described herein is also a food product including an oil and fat composition containing 50% by mass to 100% by mass of milk fat and having a pentanal/hexanal ratio by mol of 0.15 to 0.70 based on volatile components at 180°C.

Furthermore, the food product preferably includes 0.01 ppm to 20000 ppm of the oil and fat composition.

Furthermore, the edible oil and fat content of the food product is preferably 10% by mass to 100% by mass.

The present invention is a method for manufacturing an oil and fat composition, the method including a step for heating a raw material oil and fat composition including 50% by mass to 100% by mass of milk fat while supplying oxygen thereto at a rate of 0.02 to 2 L/minute per 1 kg of said raw material oil and fat composition, wherein said heating is performed for 1 hour to 72 hours, and obtaining an oxidized oil and fat composition having a pentanal/hexanal ratio by mol of 0.15 to 0.70 based on volatile components at 180°C.

Furthermore, the raw material oil and fat composition preferably includes 70% by mass to 100% by mass of milk fat.

Furthermore, the heating is preferably performed at a temperature of 75°C to 150°C.

Furthermore, the oil and fat content of the raw material oil and fat composition is preferably 90% by mass to 100% by mass.

Furthermore, the milk fat is preferably anhydrous milk fat.

Furthermore, the peroxide value of the oxidized oil and fat composition is preferably 15 to 150, and more preferably 20 to 120.

Also described is a method for imparting a milk flavor to a food product, the method characterized by comprising adding an oil and fat composition to a food product, the oil and fat composition containing 50% by mass to 100% by mass of milk fat and having a pentanal/hexanal ratio by mol of 0.15 to 0.70 based on volatile components at 180°C.

The "pentanal/hexanal ratio by mol based on volatile components at 180°C" in the present invention is calculated by dividing the amount of pentanal by the amount of hexanal based on measurement of the amounts of pentanal and hexanal volatilized when the oil and fat composition is heated to 180°C. Specifically, 0.5 g of the oil and fat composition of the present invention is heated (stirred for 5 minutes and equilibrated for 3 minutes) at 180°C in a dynamic headspace container (screw neck vial, 20 mL, manufactured by GERSTEL K.K.), the headspace is purged with helium (25 mL/minute, 1 minute), the volatilized component is trapped in Tenax TA (Tenax TA glass tube TDU, manufactured by GERSTEL K.K.) and desorbed at 250°C, and the pentanal and hexanal are measured.

The pentanal/hexanal ratio (molar) based on volatile components at 180°C in the present invention is 0.15 to 0.70, preferably 0.20 to 0.68, and more preferably 0.23 to 0.65. A pentanal/hexanal ratio (molar) in this predetermined range makes it possible to obtain an oil and fat composition having a higher degree of milk flavor. In the present invention, the oil and fat composition is processed so that the pentanal/hexanal ratio (molar) of the oil and fat composition is in the predetermined range. The method of this processing is not particularly limited, but preferably comprises oxidizing the oil and fat composition.

The term "milk fat" in the present invention refers to milk fat that is obtained from raw milk, cow's milk, or special cow's milk and that has a fat content of 95% by mass to 100% by mass. Examples thereof include anhydrous milk fat, clarified butter, and the like. Anhydrous milk fat is a product obtained by removing almost all components other than milk fat from cow's milk or the like, and is sometimes written as AMF (Anhydrous Milk Fat, butter oil) or the like. Clarified butter is obtained by fractionation of the fat content of butter. The milk fat used in the present invention is preferably anhydrous milk fat or clarified butter, and is more preferably anhydrous milk fat. The oil and fat content of the milk fat is preferably 98% by mass to 100% by mass, and is more preferably 99% by mass to 100% by mass.

The milk fat content of the oil and fat composition of the present invention is 50% by mass to 100% by mass, preferably 60% by mass to 100% by mass, more preferably 65% by mass to 100% by mass, further preferably 95% by mass to 100% by mass, and most preferably 100% by mass (i.e., exclusively milk fat) .

The oil and fat composition may also include edible oil and fat other than milk fat. The oil and fat content of the oil and fat composition is preferably 90% by mass to 100% by mass, more preferably 95% by mass to 100% by mass, and further preferably 98% by mass to 100% by mass. The edible oil and fat is not particularly limited, but is preferably any one or more types thereof selected from a medium-chain fatty acid triglyceride, soybean oil, rapeseed oil, corn oil, palm oil, and fractionated palm oil, and is more preferably a medium-chain fatty acid triglyceride and/or soybean oil, and further preferably a medium-chain fatty acid triglyceride. Adopting a predetermined edible oil and fat makes it possible to obtain a better flavor.

In the present invention, the peroxide value (referred to as "POV" hereinafter) of the oil and fat composition is preferably 15 to 150, more preferably 20 to 120, and further preferably 30 to 115. A predetermined range of POV can be obtained by oxidation of the oil and fat composition, but the method of oxidation is not particularly limited. The temperature of oxidation is preferably 75°C to 150°C, more preferably 80°C to 140°C, and further preferably 95°C to 140°C. The oxidation time is 1 hour to 72 hours.

Oxidation is performed by supplying oxygen to the raw material oil and fat composition. The supply source of oxygen may be oxygen alone or may be air or another source that includes oxygen. The supply source of oxygen is preferably air. A configuration is adopted so as to obtain an oxygen supply rate of 0.02 to 2 L/minute per 1 kg of the raw material oil and fat composition. In the case of air, for example, the oxygen supply rate is 0.1 to 10 L/minute, more preferably 0.3 to 5 L/minute, per 1 kg of the raw material oil and fat composition. When oxidation is performed, the raw material oil and fat composition is preferably stirred.

The milk fat content of the raw material oil and fat composition is 50% by mass to 100% by mass, preferably 60% by mass to 100% by mass, more preferably 65% by mass to 100% by mass, further preferably 95% by mass to 100% by mass, and most preferably 100% by mass (i.e., exclusively milk fat).

The raw material oil and fat composition may also include edible oil and fat other than milk fat. The oil and fat content of the raw material oil and fat composition is preferably 90% by mass to 100% by mass, more preferably 95% by mass to 100% by mass, and further preferably 98% by mass to 100% by mass. The edible oil and fat is not particularly limited, but is preferably any one or more types thereof selected from a medium-chain fatty acid triglyceride, soybean oil, rapeseed oil, corn oil, palm oil, and fractionated palm oil, and is more preferably a medium-chain fatty acid triglyceride and/or soybean oil, and further preferably a medium-chain fatty acid triglyceride. Adopting a predetermined edible oil and fat makes it possible to impart a better flavor.

The oil and fat composition obtained by the method of the present invention is preferably added particularly to a food product containing an edible oil and fat. Examples of such food products include margarine, whipped cream, coffee whitener, and other emulsions, shortening and other oil and fat products, creaming powder and other oil-and-fat-containing powder products, chocolate and other confectioneries, and the like. The edible oil and fat content of the food product is preferably 10% by mass to 100% by mass, and more preferably 30% by mass to 100% by mass.

The content of the oil and fat composition obtained by the method of the present invention in the food product may be adjusted in accordance with the effect thereof, but is preferably 0.01 ppm to 20000 ppm, more preferably 0.01 ppm to 10000 ppm, more preferably 0.05 ppm to 10000 ppm, and most preferably 0.1 ppm to 5000 ppm with respect to the food product.

### [Examples]

Examples and comparative examples of the products obtained by the method of the present invention are described below.

The following was used to put the present invention into practice.

Anhydrous milk fat (product name: Butter oil CML, manufactured by MARUWAYUSHI CO., LTD., fat content: 99.8% by mass)

### (Oxidation of milk fat)

Anhydrous milk fat (200 g) was placed in a stainless steel beaker and stirred while being incubated at 100°C, and air (200 mL/minute) was supplied thereto. Sampling was performed 0, 3, 4.5, 5, 5.5, 5.8, and 6.5 hours later, and an oil and fat composition was obtained (Preparation Examples 1 through 7).

### (Preparation corresponding to Example 3 in Japanese Laid-open Patent Publication No. 64-39962)

An oil and fat composition was prepared in accordance with the method described in Example 3 on p. 346, upper left column, line 17 of Japanese Laid-open Patent Publication No. 64-39962.

In a flask, 200 g of anhydrous milk fat and 40 g of a 10% saline solution (adjusted to pH 4 using citric acid/sodium citrate) were mixed, and the mixture was stirred and incubated for 16 hours at 70°C. After incubation, centrifugal separation was performed, an oil phase was recovered, and an oil and fat composition was obtained (Preparation Example 8).

### (Preparation corresponding to Example 3 in Japanese Laid-open Patent Publication No. 2015-53880)

An oil and fat composition was prepared in accordance with the method described in paragraph [0053] (Example 3) of Japanese Laid-open Patent Publication No. 2015-53880.

Specifically, 10 g of a product obtained by stirring 86 parts by mass of anhydrous milk fat, 5 parts by mass of powdered skim milk, 6 parts by mass of glucose, and 3 parts by mass of water in a homomixer at 3500 rpm for 30 minutes was transferred to a pressure-resistant vial, and the vial was tightly sealed. The tightly sealed vial was heated in a 180°C oil bath. Because the temperature inside the tightly sealed vial could not be measured, an equal amount of raw material was transferred to an identical pressure-resistant vial, and the temperature of the contents of the vial heated in an unsealed state was used as a reference. Heating of the tightly sealed vial was ended 5 minutes after the raw material temperature in the unsealed vial reached 175°C (heating was ended approximately 16 minutes after the start of heating). (The product temperature at the time heating was ended was 175.6°C.) The product was cooled and filtered, the filtrate was recovered, and an oil and fat composition was obtained (Preparation Example 9).

### (Preparation corresponding to Example 1 in Japanese Laid-open Patent Publication No. 2014-54207)

An oil and fat composition was prepared in accordance with the method described in paragraph [0030] (Example 1) of Japanese Laid-open Patent Publication No. 2014-54207.

Specifically, 150 g of butter was transferred to a frying pan and heated for 60 minutes at a temperature of 120 to 130°C using an IH heater. The product was cooled and filtered, the filtrate was recovered, and an oil and fat composition was obtained (Preparation Example 10).

### (Preparation corresponding to Example 1 in Japanese Laid-open Patent Publication No. 62-198352)

An oil and fat composition was prepared in accordance with the method described in Example 1 on p. 286, upper left column, line 9 of Japanese Laid-open Patent Publication No. 62-198352.

Specifically, 150 g of anhydrous milk fat, 1.23 g of lecithin, 1.55 g of whey protein, 1.55 g of glucose, and 0.7 g of water were transferred to a three-necked flask, the temperature of the mixture was increased to 108 to 110°C for 20 minutes under stirring, and the mixture was then incubated for 15 minutes. Rubber stoppers were then placed in the mouths of the flask to prevent volatile components from escaping from the container. The product was cooled and filtered, the filtrate was recovered, and an oil and fat composition was obtained (Preparation Example 11).

### (Preparation corresponding to Example 1 in Japanese Laid-open Patent Publication No. 62-259542)

An oil and fat composition was prepared in accordance with the method described in Example 1 on p. 228, upper left column, line 6 of Japanese Laid-open Patent Publication No. 62-259542.

Specifically, butter was transferred to a three-necked flask and stirred/heated for 120 minutes in an 80°C oil bath, the oil content thereof was recovered, and an oil and fat composition was obtained. Rubber stoppers were then placed in the mouths of the flask to prevent volatile components from escaping from the container (Preparation Example 12).

The peroxide values (POV) of the resultant oxidized milk fats were measured in accordance with "Standard Methods for the Analysis of Fats, Oils, and Related Materials, 2.5.2: Peroxide Value." The pentanal/hexanal ratios (molar) based on volatile components at 180°C of the oil and fat compositions were calculated on the basis of the results measured under the conditions described below. The values are indicated in Table 1.

### <Conditions for gas chromatography-mass spectrometry (GC/MS)>

Apparatus: GC Agilent 7890A/MS 5975B, GERSTEL HS/TDU/CIS/ODP Column: Phenomen ZB-WAXplus, 60 m length × 0.25 mm inside diameter × 0.25 µm membrane thickness

### Collection:

(1) A sample of 0.5 g of the oil and fat composition is heated to 180°C (stirred 5 minutes and equilibrated 3 minutes) in a dynamic headspace (DHS) container (screw neck vial, 20 mL, manufactured by GERSTEL K.K.).
(2) The headspace is purged with helium (25 mL/min × 1 min), and the volatilized component is trapped in Tenax TA (Tenax TA glass tube TDU, manufactured by GERSTEL K.K.).

### Thermal desorption:

(1) The trapped component is thermally desorbed at 250°C in helium (50 mL/min × 3 min), and is trapped in Tenax TA (Tenax TA glass tube TDU, manufactured by GERSTEL K.K.) in a cooled injection system (CIS) (-50°C).
(2) The inside of the CIS is heated to 250°C, and the volatilized component is introduced to GC/MS and analyzed.
Inlet: 250°C temperature, splitless
Oven: 40°C (10 min) → 2°C/min → 100°C → 5°C/min → 210°C (10 min)
Analysis time: 72 min
Ionization method: EI (70 eV)
Ion source: 230°C
Quadrupole: 150°C
Measurement mode: SCAN
ODP/MS split ratio: 2/1

### <Calculation of pentanal/hexanal ratio (molar)>

Treatment and analysis of the abovementioned sample were performed in the same manner using a medium-chain fatty acid triglyceride including a predetermined amount of pentanal or hexanal. The pentanal or hexanal in the sample was quantified using the resultant peak area as a reference. From the quantitative value thus obtained, the pentanal/hexanal ratio (molar) based on volatile components at 180°C was calculated by dividing the amount of pentanal (moles) by the amount of hexanal (moles).

Pentanal (product name: Valeraldehyde, manufactured by Alfa Aesar), hexanal (product name: Hexanal, manufactured by Wako Pure Chemical Industries, Ltd.), and a medium-chain fatty acid triglyceride (product name: ACTOR M-107FR MCT, manufactured by RIKEN VITAMIN CO., LTD.) were used.

**[Table 1]**

| | Preparation Example 1 | Prep. Ex. 2 | Prep. Ex. 3 | Prep. Ex. 4 | Prep. Ex. 5 | Prep. Ex. 6 | Prep. Ex. 7 | Prep. Ex. 8 | Prep. Ex. 9 | Prep. Ex. 10 | Prep. Ex. 11 | Prep. Ex. 12 |
|---|---|---|---|---|---|---|---|---|---|---|---|---|
| Incubation temperature (°C) | - | 100 | 100 | 100 | 100 | 100 | 100 | 70 | 175-180 | 120-130 | 108-110 | 80 |
| Incubation time (hours) | 0 | 3 | 4.5 | 5 | 5.5 | 5.8 | 6.5 | 16 | 1 or less | 1 | 1 or less | 2 |
| POV | 0.9 | 4.8 | 21.9 | 37.8 | 50.9 | 75.5 | 114.6 | 1.0 | 0.88 | 1.56 | 1.38 | 0.77 |
| Pentanal/hexanal^{*1} | 0.87 | 0.75 | 0.64 | 0.65 | 0.64 | 0.63 | 0.62 | 0.94 | 0^{*2} | 0^{*2} | 0.05 | 0^{*2} |

| | | | | | | | | | | | | |
|---|---|---|---|---|---|---|---|---|---|---|---|---|
| *1: Pentanal/hexanal ratio (molar) based on volatile components at 180°C *2: Pentanal not detected | | | | | | | | | | | | |

### (Evaluation in margarine)

A commercially available margarine (Rama Butter Flavor, manufactured by J-OIL MILLS, Inc.) was incubated at 30°C, 0.03 g of rapeseed oil (control) or the oil and fat composition of Preparation Examples 1 through 12 was added and stirred into 30 g of the softened margarine, and the mixture was cooled in a refrigerator. The resultant margarine was eaten, and the milk feeling/aftertaste and deterioration odor intensity were evaluated as indicated below.

### <Milk feeling/aftertaste>

O: Milk feeling and aftertaste thereof are strong relative to control
Δ: Milk feeling and aftertaste thereof are somewhat strong relative to control
X: No different than control

### <Deterioration odor intensity>

O: No deterioration odor
Δ: Slight deterioration odor perceived
X: Deterioration odor perceived

### [Table 2]

**Table 2-1**

| | Control | Comparative Example 2-1 | Comparative Example 2-2 | Example 2-1 | Example 2-2 | Example 2-3 |
|---|---|---|---|---|---|---|
| Oil and fat composition | Rapeseed oil | Preparation Example 1 | Preparation Example 2 | Preparation Example 3 | Preparation Example 4 | Preparation Example 5 |
| Milk feeling/aftertaste | × | × | × | Δ | ○ | ○ |
| Deterioration odor intensity | ○ | ○ | ○ | ○ | ○ | ○ |

**Table 2-2**

| | Example 2-4 | Example 2-5 | Comparative Example 2-3 | Comparative Example 2-4 | Comparative Example 2-5 | Comparative Example 2-6 | Comparative Example 2-7 |
|---|---|---|---|---|---|---|---|
| Oil and fat composition | Preparation Example 6 | Preparation Example 7 | Preparation Example 8 | Preparation Example 9 | Preparation Example 10 | Preparation Example 11 | Preparation Example 12 |
| Milk feeling/aftertaste | ○ | ○ | × | × | × | × | × |
| Deterioration odor intensity | ○ | ○ | ○ | ○ | ○ | ○ | ○ |

As indicated in Examples 2-1 through 2-5, milk feeling/aftertaste of the margarine was strong for the oil and fat compositions of Preparation Examples 3 through 7 in which the pentanal/hexanal ratio (molar) was 0.62 to 0.65. The milk feeling/aftertaste of the margarine was also strong for the oil and fat compositions of Preparation Examples 3 through 7 in which the POV was 21.9 to 114.6. The effect was strong particularly when the POV was at least 37.8.

On the one hand, as indicated in Comparative Examples 2-1 through 2-3, the milk feeling/aftertaste of the margarine was equal to that of the control for the oil and fat compositions of Preparation Examples 1, 2, and 8 in which the pentanal/hexanal ratios (molar) were 0.87, 0.75, and 0.94, respectively. In Comparative Example 2-3 corresponding to Example 3 of Japanese Laid-open Patent Publication No. 64-39962, the pentanal/hexanal ratio (molar) was increased from 0.87 to 0.94 by processing of the raw material anhydrous milk fat.

On the other hand, as indicated in Comparative Examples 2-4 through 2-7, the milk feeling/aftertaste of the margarine was equal to that of the control for the oil and fat compositions of Preparation Examples 9 through 12 in which the pentanal/hexanal ratios (molar) were 0.05 or less. Almost no increase in POV was found from each preparation method in Comparative Example 2-4 corresponding to Example 3 of Japanese Laid-open Patent Publication No. 2015-53880, Comparative example 2-5 corresponding to Example 1 of Japanese Laid-open Patent Publication No. 2014-54207, Comparative example 2-6 corresponding to Example 1 of Japanese Laid-open Patent Publication No. 62-198352, or Comparative Example 2-7 corresponding to Example 1 of Japanese Laid-open Patent Publication No. 62-259542.

### (Evaluation in creaming powder)

Powdered oil and fat compositions were obtained by adding 0.0005 part by mass of the oil and fat compositions of Preparation Examples 4 through 6 to 100 parts by mass of a composition obtained by blending ultra-hard palm kernel oil, corn syrup, and an emulsifier in the ratios indicated in Table 3. A creaming powder was prepared by adding 50 parts by mass of water to 50 parts by mass of each powdered oil and fat composition and performing emulsification/spraying by the usual method.

**[Table 3]**

| Composition | Ratio (parts by mass) |
|---|---|
| Corn syrup | 51.79 |
| Ultra-hard palm kernel oil | 45 |
| Emulsifier mix1) | 3.21 |
| Total | 100 |

| | |
|---|---|
| 1) Emulsifier mix: mixture of acid casein, sodium hydroxide, a sorbitan fatty acid ester, and a glycerin fatty acid ester | |

The resultant creaming powder (10 g) was dissolved in 90 g of hot water (containing approximately 0.5 ppm of the oil and fat composition of each Preparation Example), and the product was eaten and evaluated according to evaluation criteria described below. The results are presented in Table 4.

### <Milk flavor>

⊚ : Extremely strong
O : Strong
Δ : Somewhat strong
X : Weak

### <Degree of aftertaste>

⊚ : Extremely strong
O : Strong
Δ : Somewhat strong
X : Weak

**[Table 4]**

| | Example 4-1 | Example 4-2 | Example 4-3 |
|---|---|---|---|
| Oil and fat composition | Preparation Example 4 | Preparation Example 5 | Preparation Example 6 |
| Milk flavor | Δ | ⊚ | ○ |
| Degree of aftertaste | Δ | ⊚ | Δ |

As indicated in Examples 4-1 through 4-3, milk flavor was obtained in each example despite a small content of about 5 ppm of the oil and fat composition of the present invention. Even in Preparation Example 4 in which the effect was low, a creaming powder having strong milk flavor and a significant degree of aftertaste could be obtained by increasing the added amount of the oil and fat composition of the present invention.

### (Examination of oxidation conditions)

Anhydrous milk fat (200 g) was placed in a stainless steel beaker and stirred while being incubated at 120°C, and air (200 mL/minute) was supplied thereto. After 4 hours, the temperature was set to 80°C and further incubation was performed for 10 hours, and an oil and fat composition was obtained (Preparation Example 9).

The resultant oil and fat composition was analyzed in the same manner as the oil and fat composition of Preparation Example 1. The results are presented in Table 5.

**[Table 5]**

| | Preparation Example 9 |
|---|---|
| POV | 50.0 |
| Pentanal/hexanal* | 0.63 |

| | |
|---|---|
| *: Pentanal/hexanal ratio (molar) based on volatile components at 180°C | |

The oil and fat composition was added to a commercially available margarine and evaluation was performed in the same manner as in Comparative Example 2-1, except that the oil and fat composition of Preparation Example 9 was used instead of the oil and fat composition of Preparation Example 1. The results are presented in Table 6.

**[Table 6]**

| | Example 6-1 |
|---|---|
| Oil and fat composition | Preparation Example 9 |
| Milk feeling/aftertaste | ○ |
| Deterioration odor intensity | ○ |

As indicated in Example 6-1, an oil and fat composition having adequate effect was obtained even when the heating temperature was changed from 120°C to 80°C partway through the heating process.

### (Evaluation 1 with oil and fat composition including milk fat and edible oil and fat other than milk fat)

An oil and fat composition including 70% by mass of milk fat was prepared by mixing 60 g of a medium-chain fatty acid triglyceride (product name: ACTOR M-107FR MCT, manufactured by Riken Vitamin Co., Ltd.) with 140 g of anhydrous milk fat. The oil and fat composition thus prepared (200 g) was placed in a stainless steel beaker and stirred while being incubated at 120°C, and air (200 mL/minute) was supplied thereto. Reaction was carried out for 13 hours, and an oil and fat composition was obtained (Preparation Example 10).

The resultant oil and fat composition (Preparation Example 10) was analyzed in the same manner as the oil and fat composition of Preparation Example 1. In the analysis results, the POV was 58.7 and the pentanal/hexanal ratio (molar) based on volatile components at 180°C was 0.27.

The oil and fat composition was added to a commercially available margarine and evaluation was performed in the same manner as in Comparative Example 2-1, except that the oil and fat composition of Preparation Example 10 was used instead of the oil and fat composition of Preparation Example 1. The results are presented in Table 7.

**[Table 7]**

| | Example 7-1 |
|---|---|
| Oil and fat composition | Preparation Example 10 |
| Milk feeling/aftertaste | ○ |
| Deterioration odor intensity | ○ |

As indicated in Example 7-1, adequate effect was obtained even in an oil and fat composition including 70% by mass of milk fat.

### (Evaluation 2 with oil and fat composition including milk fat and edible oil and fat other than milk fat)

Treatment was performed in the same manner in Preparation Example 10 except that soybean oil (manufactured by J-OIL MILLS, Inc.) was used instead of a medium-chain fatty acid triglyceride, and an oil and fat composition was obtained (Preparation Example 11).

The resultant oil and fat composition (Preparation Example 11) was analyzed in the same manner as the oil and fat composition of Preparation Example 1. In the analysis results, the POV was 44.6 and the pentanal/hexanal ratio (molar) based on volatile components at 180°C was 0.23.

The oil and fat composition was added to a commercially available margarine and evaluation was performed in the same manner as in Comparative Example 2-1, except that the oil and fat composition of Preparation Example 11 was used instead of the oil and fat composition of Preparation Example 1. The results are presented in Table 8.

**[Table 8]**

| | Example 8-1 |
|---|---|
| Oil and fat composition | Preparation Example 11 |
| Milk feeling/aftertaste | ○ |
| Deterioration odor intensity | Δ |

As indicated in Example 8-1, adequate effect was obtained even in an oil and fat composition including 70% by mass of milk fat. The effect of the present invention was obtained regardless of whether a medium-chain fatty acid triglyceride or soybean oil was used as the edible oil and fat other than milk fat, but from the perspective of deterioration odor intensity, the medium-chain fatty acid triglyceride was found to be preferable.

### (Evaluation in chocolate)

A commercially available chocolate (milk chocolate, manufactured by Meiji Co., Ltd.) was melted at 50 to 60°C. To 30 g of the melted chocolate, 0.03 g of rapeseed oil (control) or the oil and fat composition of Preparation Examples 5, 10, and 11 was added, and the mixture was then stirred and subsequently cooled in a refrigerator. The resultant chocolate was eaten, and the milk feeling/aftertaste and deterioration odor intensity were evaluated as indicated below. The results are presented in Table 9.

### <Milk feeling/aftertaste>

O: Milk feeling and aftertaste thereof are strong relative to control
Δ: Milk feeling and aftertaste thereof are somewhat strong relative to control
×: No different than control

### <Deterioration odor intensity>

○: No deterioration odor
Δ: Slight deterioration odor perceived
×: Deterioration odor perceived

**[Table 9]**

| | Control | Example 9-1 | Example 9-2 | Example 9-3 |
|---|---|---|---|---|
| Oil and fat composition | Rapeseed oil | Preparation Example 5 | Preparation Example 10 | Preparation Example 11 |
| Milk feeling/aftertaste | × | ○ | Δ | Δ |
| Deterioration odor intensity | ○ | ○ | ○ | ○ |

As indicated in Examples 9-1 through 9-3, when the oil and fat composition of the present invention obtained from oil and fat including 100% by mass of milk fat or 70% by mass of milk fat was added to chocolate, chocolate having increased milk feeling/aftertaste was obtained.

### (Evaluation when clarified butter is used)

Butter (product name: Hokkaido Yotsuba Butter (Unsalted), manufactured by Yotsuba Milk Products Co., Ltd.) was heated to 60°C, the separated oil phase was fractionated, and clarified butter was obtained (fat content: 99.5% by mass). The clarified butter (200 g) was placed in a stainless steel beaker and stirred while being incubated at 120°C, and air (200 mL/minute) was supplied thereto. Reaction was carried out for 6 hours, and an oil and fat composition was obtained (Preparation Example 12).

The resultant oil and fat composition (Preparation Example 12) was analyzed in the same manner as the oil and fat composition of Preparation Example 1. In the analysis results, the POV was 58.2 and the pentanal/hexanal ratio (molar) based on volatile components at 180°C was 0.59.

The oil and fat composition was added to a commercially available margarine and evaluation was performed in the same manner as in Comparative Example 2-1, except that the oil and fat composition of Preparation Example 12 was used instead of the oil and fat composition of Preparation Example 1. The results are presented in Table 10.

**[Table 10]**

| | Example 10-1 |
|---|---|
| Oil and fat composition | Preparation Example 12 |
| Milk feeling/aftertaste | ○ |
| Deterioration odor intensity | ○ |

As indicated in Example 10-1, adequate effect was obtained even when milk fat fractionated from butter was used.

## Claims

1. A method for manufacturing an oil and fat composition, the method including a step for heating a raw material oil and fat composition including 50% by mass to 100% by mass of milk fat while supplying oxygen thereto at a rate of 0.02 to 2 L/minute per 1 kg of said raw material oil and fat composition, wherein said heating is performed for 1 hour to 72 hours, and obtaining an oxidized oil and fat composition having a pentanal/hexanal ratio by mol of 0.15 to 0.70 based on volatile components at 180°C.

2. The manufacturing method according to claim 1, wherein said raw material oil and fat composition includes 70% by mass to 100% by mass of milk fat.

3. The manufacturing method according to claim 1 or 2, wherein said heating is performed at a temperature of 75°C to 150°C.

4. The manufacturing method according to any one of claims 1 through 3, wherein the oil and fat content of said raw material oil and fat composition is 90% by mass to 100% by mass.

5. The manufacturing method according to any one of claims 1 through 4, wherein said milk fat is anhydrous milk fat.

6. The manufacturing method according to any one of claims 1 through 5, wherein the peroxide value of said oxidized oil and fat composition is 15 to 150.

7. A manufacturing method for a food product, the method including obtaining an oil and fat composition by the manufacturing method according to any one of claims 1 through 6, and adding the oil and fat composition to a food product material.

8. The manufacturing method according to claim 7 wherein the oil and fat composition is added to the food product material so that said oil and fat composition is included in the food product at 0.01 ppm to 20,000 ppm.

## Patentansprüche

1. Verfahren zur Herstellung einer Öl- und Fettzusammensetzung, wobei das Verfahren einen Schritt des Erhitzens einer Öl- und Fett-Rohmaterialzusammensetzung, die 50 Massen-% bis 100 Massen-% Milchfett enthält, während Sauerstoff mit einer Rate von 0,02 bis 2 l/min pro 1 kg der Öl- und Fett-Rohmaterialzusammensetzung zugeführt wird, wobei das Erhitzen 1 h bis 72 h lang durchgeführt wird, und des Erhaltens einer oxidierten Öl- und Fettzusammensetzung mit einem Pentanal/Hexanal-Molverhältnis von 0,15 bis 0,70, bezogen auf bei 180 °C flüchtige Bestandteile, umfasst.

2. Herstellungsverfahren nach Anspruch 1, wobei die Öl- und Fett-Rohmaterialzusammensetzung 70 Massen-% bis 100 Massen-%. Milchfett enthält.

3. Herstellungsverfahren nach Anspruch 1 oder 2, wobei das Erhitzen auf eine Temperatur von 75 °C bis 150 °C erfolgt.

4. Herstellungsverfahren nach einem der Ansprüche 1 bis 3, wobei der Öl- und Fettgehalt der Öl- und Fett-Rohmaterialzusammensetzung 90 Massen-% bis 100 Massen-% beträgt.

5. Herstellungsverfahren nach einem der Ansprüche 1 bis 4, wobei das Milchfett wasserfreies Milchfett ist.

6. Herstellungsverfahren nach einem der Ansprüche 1 bis 5, wobei die Peroxidzahl der oxidierten Öl- und Fettzusammensetzung 15 bis 150 beträgt.

7. Herstellungsverfahren für ein Nahrungsmittelprodukt, wobei das Verfahren das Erhalten einer Öl- und Fettzusammensetzung durch ein Herstellungsverfahren nach einem der Ansprüche 1 bis 6 und das Zusetzen der Öl- und Fettzusammensetzung zu einem Nahrungsmittelproduktmaterial umfasst.

8. Herstellungsverfahren nach Anspruch 7, wobei die Öl- und Fettzusammensetzung so zu dem Nahrungsmittelproduktmaterial zugesetzt wird, dass die Öl- und Fettzusammensetzung im Nahrungsmittelprodukt zu 0,01 ppm bis 20.000 ppm enthalten ist.

## Revendications

1. Procédé de fabrication d'une composition d'huile et de matière grasse, le procédé comprenant une étape de chauffage d'une composition d'huile et de matière grasse de matière première comprenant de 50 % en masse à 100 % en masse de matière grasse de lait tout en lui fournissant de l'oxygène à un débit de 0,02 à 2 L/minute pour 1 kg de ladite composition d'huile et de matière grasse de matière première, dans lequel ledit chauffage est effectué pendant 1 heure à 72 heures, et d'obtention d'une composition d'huile et de matière grasse oxydée ayant un rapport molaire pentanal/hexanal de 0,15 à 0,70 sur la base de composants volatils à 180°C.

2. Procédé de fabrication selon la revendication 1, dans lequel ladite composition d'huile et de matière grasse de matière première comprend de 70 % en masse à 100 % en masse de matière grasse de lait.

3. Procédé de fabrication selon la revendication 1 ou 2, dans lequel ledit chauffage est effectué à une température de 75°C à 150°C.

4. Procédé de fabrication selon l'une quelconque des revendications 1 à 3, dans lequel ladite teneur d'huile et de matière grasse de ladite composition d'huile et de matière grasse de matière première est de 90 % en masse à 100 % en masse.

5. Procédé de fabrication selon l'une quelconque des revendications 1 à 4, dans lequel ladite matière grasse de lait est de la matière grasse de lait anhydre.

6. Procédé de fabrication selon l'une quelconque des revendications 1 à 5, dans lequel l'indice de peroxyde de ladite composition d'huile et de matière grasse oxydée est de 15 à 150.

7. Procédé de fabrication d'un produit alimentaire, le procédé comprenant l'obtention d'une composition d'huile et de matière grasse par le procédé de fabrication selon l'une quelconque des revendications 1 à 6, et l'ajout de la composition d'huile et de matière grasse à un matériau de produit alimentaire.

8. Procédé de fabrication selon la revendication 7, dans lequel la composition d'huile et de matière grasse est ajoutée au matériau de produit alimentaire de sorte que ladite composition d'huile et de graisse est incluse dans le produit alimentaire à raison de 0,01 ppm à 20 000 ppm.
